# EUROPEAN PATENT SPECIFICATION

(11) **EP 3 415 303 B1**
(45) Date of publication and mention of the grant of the patent: **11.10.2023**
(21) Application number: 16889966.4
(22) Date of filing: 21.12.2016
(51) Int. Cl.: B29D 30/06, B29C 73/16, B29L 30/00, B60C 19/12

(54) **TIRE MANUFACTURING METHOD**
REIFENHERSTELLUNGSVERFAHREN
PROCÉDÉ DE FABRICATION DE PNEUMATIQUE

(30) Priority: 08.02.2016 JP 2016021998
(43) Date of publication of application: 19.12.2018
(73) Proprietor: Bridgestone Corporation, Tokyo 104-8340 (JP)
(72) Inventor: OOSHIMA, Takayuki, Tokyo 104-8340 (JP); NAKAMURA, Toshiki, Tokyo 104-8340 (JP)
(74) Representative: Marks & Clerk LLP
(86) International application number: PCT/JP2016/088034
(87) International publication number: WO 2017/138265

(56) References cited:
- WO-A1-02/078939
- WO-A1-02/078939
- GB-A- 2 021 052
- JP-A- S5 025 683
- JP-A- S5 522 591
- JP-A- S5 522 591
- JP-A- S5 893 612
- JP-A- S5 893 612
- JP-A- S5 915 442
- JP-A- S5 915 442
- JP-A- S54 149 102
- JP-A- S54 149 102
- JP-A- S55 127 212
- JP-A- S55 127 212
- JP-A- 2001 191 423
- JP-A- 2001 191 423
- JP-A- 2006 168 329
- JP-A- 2006 168 329
- JP-A- 2009 149 084
- JP-A- 2009 149 084
- JP-A- 2014 217 953
- JP-A- 2015 214 620
- JP-A- 2015 214 620
- JP-B1- S5 025 683
- US-A- 1 320 708
- US-A- 1 320 708
- US-A1- 2013 061 995
- US-A1- 2013 061 995

## Description

### BACKGROUND OF THE INVENTION

### Field of the Invention

The present invention relates to a tire manufacturing method wherein a sealing layer is formed on an inner surface of a tire.

### Related Background of the Invention

In the tire called a self-sealing tire (or a sealant tire), a sealing layer is formed of a sealant on an inner surface of the tire. When a through-hole is opened in the tire, the through-hole is automatically sealed up with the sealant, and the air is prevented from leaking from the tire. As a manufacturing method of such a tire, a manufacturing method has been known in which a strip-like sealant is spirally stuck to the inner surface of the tire to form the sealing layer (refer to Patent Literature 1-3.

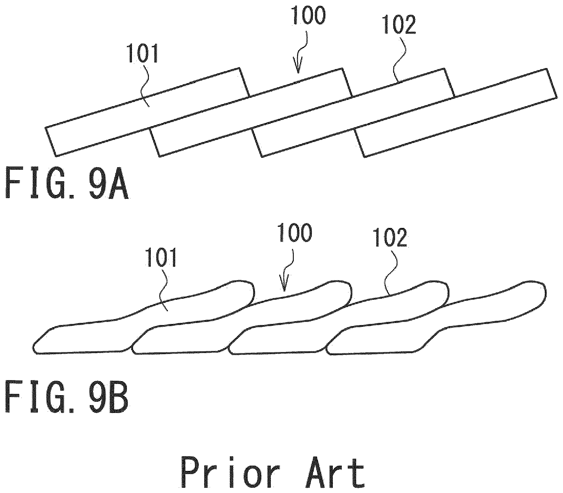

Fig. 9A and 9B are sectional views showing an example of a sealing layer 100 formed by a conventional tire manufacturing method and shows a cross-sectional shape in a width direction of a sealant 101 arranged on the inner surface of the tire. Fig. 9A schematically shows a way of arranging the sealant 101, and Fig. 9B shows the cross-sectional shape of the sealant 101 after arranging.

As illustrated, by the conventional general tire manufacturing method, the cross section of the sealant 101 is formed into a rectangular shape. In addition, a strip-like sealant 101 is spirally arranged on the inner surface of the tire while parts of the sealant 101 are successively overlapped (cf. Fig. 9A). In this way, the sealant 101 is attached to the inner surface of the tire and thus the sealing layer 100 is formed of the sealant 101.

When the sealant 101 is arranged on the inner surface of the tire (cf. Fig. 9B), a soft sealant 101 is deformed. As a result, the sealant 101 is closely contacted mutually and the sealant 101 and the inner surface of the tire are closely contacted, whereby a sealing performance of the sealing layer 100 is provided. However, a thickness of the sealing layer 100 is apt to become uneven since the sealant 101 is overlapped mutually each other. With this, the thickness of the sealing layer 100 varies, which is resulted in a fear that an irregularity of surface 102 of the sealing layer 100 would be increased in the inner surface of the tire.

It is necessary to make the thickness of the sealing layer 100 thicker than the minimum thickness or more to secure the sealing performance required to the sealing layer 100. By increasing the thickness of the sealant 101, the thickness of the sealing layer 100 can be secured by the whole of the sealing layer 100 including a relatively thin part. However, the more the thickness of the sealant 101 is increased, the more the quantity of the sealant 101 is increased, that is, the weight of the tire is increased. In this regard, by such the conventional tire manufacturing method, thickness variations of the sealing layer 100 cannot be easily restrained, thus, it is difficult to reduce the thickness of the sealant 101.

Another example of a sealing layer on an inner surface of a tire is disclosed in Patent Literature 4.

### Prior Art

### Patent Literature

Patent Literature 1: JP2001018609 A
Patent Literature 2: JP2014217953 A
Patent Literature 3: JPS55127212 A
Patent Literature 4: GB2021052 A

### SUMMARY OF THE INVENTION

### Problems to be Solved by Invention

The present invention was made in view of the above-described conventional problems and an object thereof is to easily restrain the thickness variations of sealing layer when a sealing layer is formed of a strip-like sealant on an inner surface of a tire.

### Means for solving Problems

The present invention relates to a tire manufacturing method according to independent claim 1 in which a sealing layer is formed of a strip-like sealant on an inner surface of a tire. A pair of side surfaces of the sealant located on both sides in a width direction of the sealant is inclined toward the same side in the width direction of the sealant with respect to a thickness direction of the sealant. The sealant is spirally arranged on the inner surface of the tire with the adjacent side surfaces of the sealant being overlapped with each other, so that the sealing layer is formed.

### EFFECTS OF THE INVENTION

According to the present invention, when the sealing layer is formed of the strip-like sealant on the inner surface of the tire, the thickness variations of the sealing layer can be easily restrained.

### BRIEF DESCRIPTION OF THE DRAWINGS

Fig. 1 is a sectional view in a tire width direction of a tire of a present embodiment;
Fig. 2 is a configuration diagram of a tire manufacturing device of the present embodiment;
Fig. 3 is a sectional view of a sealant of the present embodiment;
Fig. 4 is a sectional view illustrating a sealing layer formed of the sealant of the present embodiment;
Fig. 5 is a sectional view illustrating another example of the sealing layer formed of the sealant of the present embodiment;
Fig. 6 is a sectional view of a sealant of a conventional example;
Fig. 7 is a sectional view of a sealant of a comparative example;
Figs . 8A to 8C are sectional views illustrating a sealing layer formed of the sealant of the comparative example; and
Figs. 9A and 9B are sectional views illustrating an example of a sealing layer formed by a conventional tire manufacturing method.

### DESCRIPTION OF THE PREFERRED EMBODIMENTS

An embodiment of a tire manufacturing method of the present invention will be described with referring to the attached drawings .

In the tire manufacturing method of the present embodiment, a sealing layer is formed of a strip-like sealant (sealant) on an inner surface of the tire so that a tire having the sealing layer is manufactured. Therefore, the tire is a self-sealing tire (sealant tire), which is to be attached to a rim of various kinds of vehicles. In addition, the tire is a tubeless pneumatic tire and is used while the air is filled in its inside.

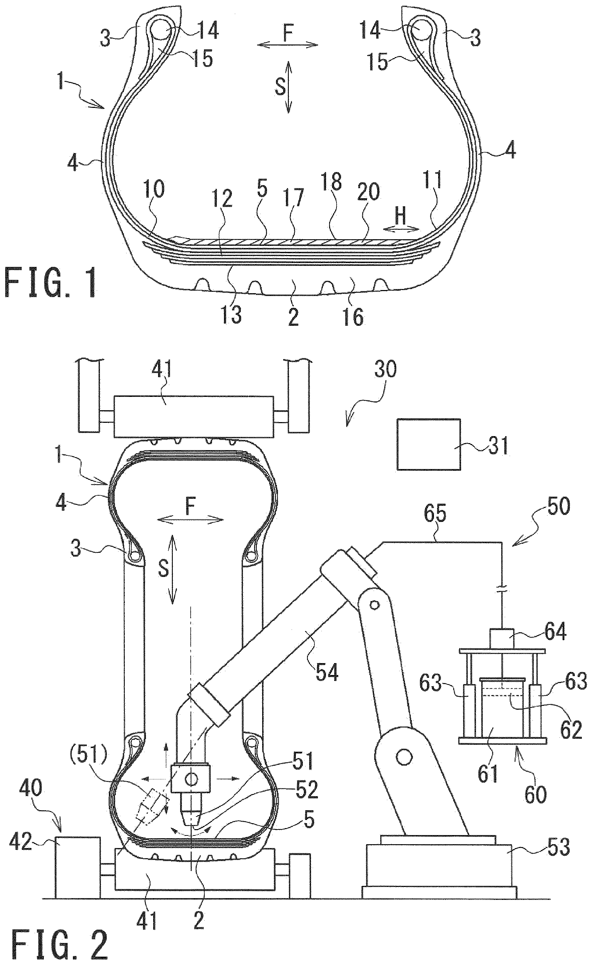

Fig. 1 is a sectional view in a tire width direction F of a tire 1 of a present embodiment.

As illustrated, the tire 1 is formed in a well-known structure by a plurality of tire constituent members. Specifically, the tire 1 comprises a circular tread part 2 grounded on a road surface, a pair of bead parts 3 located inside in a tire radial direction S of the tread part 2, a pair of side wall parts 4 located between an end of the tread part 2 and the bead part 3. In addition, the tire 1 comprises a carcass 10, an inner liner 11, a belt 12, a belt reinforcement layer 13, bead cores 14, bead fillers 15, a tread rubber 16 and a sealing layer 17. Various kinds of tread patterns are formed on the tread rubber 16.

After vulcanization of a raw tire, the sealing layer 17 is formed of a strip-like sealant 20 on an inner surface 5 of the tire 1 so that the tire 1 is manufactured. The sealant 20 has a sealing performance for a through-hole, when the through-hole is opened in a formed part of the sealing layer 17 of the tire 1 by a nail etc., the sealant 20 automatically seals up the through-hole of the tire 1. In this way, the air is prevented from leaking from the tire 1, and thus a puncture of the tire 1 is restrained.

At the time of forming the sealing layer 17, the strip-like sealant 20 is arranged on the inner surface 5 of the tire 1 along the tire circumferential direction while being gradually displaced in the tire width direction F (width direction H of the sealant 20). In this way, the sealant 20 is spirally arranged on the inner surface 5 of the tire 1 so as to be in parallel in the tire width direction F. The sealant 20 has the adhesiveness and is adhered to the inner surface 5 of the tire 1 when arranged on the inner surface 5 of the tire 1. An inner liner 11 is located on the inner surface 5 of the tire 1, and the sealant 20 is arranged on the inner liner 11. The sealant 20 is stuck to the inner surface 5 (inner liner 11) of the tire 1 by its adhesiveness and closely contacted with the inner surface 5. In addition, the adjacent parts of sealant 20 in the tire width direction F are closely contacted by the adhesiveness and stuck to each other.

The sealant 20 is continuously arranged on the inner surface 5 of the tire 1 so as to be in parallel on the inner surface 5 of the tire 1. At least a part of the inner surface 5 of the tire 1 is covered with the sealant 20, and the sealing layer 17 is formed of the sealant 20 arranged in parallel on the inner surface 5 of the tire 1. The sealing layer 17 is formed on the inner surface 5 of the tire 1 including at least an inner surface of the tread part 2. Here, the sealant 20 is arranged only on the inner surface of the tread part 2, that is, the sealing layer 17 is formed only on the inner surface of the tread part 2.

Fig. 2 is a configuration diagram of a tire manufacturing device 30 of the present embodiment and schematically shows a part of the tire manufacturing device 30. In addition, Fig. 2 shows a cross section of the tire 1, placed in the tire manufacturing device 30 and cut along the tire width direction F.

As illustrated, the tire manufacturing device 30 is a forming device for sealing layer 17 and comprises a rotating device 40 of the tire 1, an arranging device 50 of the sealant 20 and a control unit 31. The control unit 31 controls the whole of the tire manufacturing device 30 and a forming operation of the sealing layer 17 by the tire manufacturing device 30.

The rotating device 40 has a plurality of rotatable cylindrical rollers 41 and a drive unit 42 for rotating the rollers 41. The plural rollers 41 are brought into contact with the tread part 2 of the tire 1 to rotatably support the tire 1. The tire 1 is placed among the plurality of the rollers 41 and is rotated around an axis with the axis being horizontal. The drive unit 42 is connected to one roller 41 and rotates the one roller 41 by a motor (e.g., a servo motor). In accordance with rotation of the roller 41, the tire 1 is rotated while being in contact with the roller 41. The rotating device 40 controls a rotational speed and a rotation angle of the tire 1 so that the tire 1 is rotated at predetermined speed.

The arranging device 50 has a supply device 60 for supplying the sealant 20, a nozzle 51 for discharging the sealant 20 and a moving device 53 for moving the nozzle 51. The supply device 60 has a container 61 for containing the sealant 20 (materials used for forming the strip-like sealant 20), a heating member 62 located in the container 61, a pressurizing device 63 for pressurizing the sealant 20, a supply pump 64 connected to the heating member 62 and a supply line 65 of the sealant 20.

The heating member 62 is a disk-shaped platen and heats the sealant 20 in the container 61. The pressurizing device 63 is a piston cylinder mechanism for pushing the heating member 62 into the container 61 and pressurizes the sealant 20 in the container 61. The sealant 20 is pressurized by the pressurizing device 63 and discharged by the supply pump 64. The supply line 65 is connected to the supply pump 64 and the nozzle 51. By the supply pump 64, the sealant 20 is discharged to the nozzle 51 through the supply line 65. The supply device 60 supplies the sealant 20 to the nozzle 51 in succession.

The nozzle 51 is a forming part for forming the strip-like sealant 20 and has a discharging port 52 of the sealant 20. The discharging port 52 is located at the tip of the nozzle 51, and the nozzle 51 discharges the sealant 20 supplied from the supply device 60 through the discharging port 52. In addition, the nozzle 51 is a die (pipe sleeve) for forming the sealant 20 in a predetermined cross-sectional shape and the discharging port 52 is an opening formed at the nozzle 51.

By opening a shutter mounted on the nozzle 51, the sealant 20 is discharged from the discharging port 52 and formed in a cross-sectional shape corresponding to the opening shape of the discharging port 52. The nozzle 51 discharges the sealant 20 in the predetermined cross-sectional shape from the discharging port 52 in succession and forms the strip-like sealant 20. By closing the shutter of the nozzle 51, discharge of the sealant 20 from the discharging port 52 and forming of the sealant 20 of the nozzle 51 are stopped.

The moving device 53 is an industrial robot having an arm 54. The nozzle 51 is attached to the tip of the arm 54 and moved in a movable range of the arm 54. The arm 54 is an articulated arm, and the moving device 53 has at least three axes degree-of-freedom. By the moving device 53, the nozzle 51 is moved to any position and is positioned in any direction and state. By the moving device 53, the nozzle 51 is positioned in the tire 1, and the discharging port 52 of the nozzle 51 is arranged downward. The moving device 53 moves the nozzle 51 in the tire 1 while the discharging port 52 is opposed to the inner surface 5 of the tire 1.

By the moving device 53, the nozzle 51 is moved in the tire width direction F and the tire radial direction S. In addition, the moving device 53 inclines the nozzle 51 (discharge direction of the sealant 20) with respect to the tire radial direction S, by changing an arrangement angle of the nozzle 51 (discharge direction of the sealant 20 by the nozzle 51) with respect to the tire radial direction S. The nozzle 51 is moved by the moving device 53 along the inner surface 5 of the tire 1 and discharges the strip-like sealant 20 from the discharging port 52 towards the inner surface 5 of the tire 1.

At the time of manufacturing of the tire 1 by the tire manufacturing device 30, the tire 1 which has been vulcanized is placed in the rotating device 40, and by the moving device 53, the nozzle 51 is placed in the tire 1. In addition, the rotating device 40 rotates the tire 1 so as to relatively move the nozzle 51 along the tire circumferential direction. By moving device 53, the nozzle 51 is placed facing to the inner surface 5 of the tire 1 and is gradually moved in the tire width direction F. At that time, by the supply device 60, the sealant 20 is supplied to the nozzle 51 and the sealant 20 is discharged from the discharging port 52 of the nozzle 51. The strip-like sealant 20 is formed by the nozzle 51.

The strip-like sealant 20 is discharged from the discharging port 52 of the nozzle 51 towards the inner surface 5 of the tire 1 and is spirally arranged on the inner surface 5 of the tire 1. The strip-like sealant 20 is formed into a predetermined cross-sectional shape by the discharging port 52 of the nozzle 51 and is spirally stuck to the inner surface 5 of the tire 1. By the tire manufacturing device 30, the sealant 20 is arranged all over the inner surface 5 of the tire 1 and arranged in parallel in a predetermined state on the inner surface 5 of the tire 1.

The tire manufacturing device 30 forms the sealing layer 17 from the sealant 20 on the inner surface 5 of the tire 1. After the completion of formation of the sealing layer 17, the sealant 20 is stopped discharging from the discharging port 52 of the nozzle 51. In this way, forming of the sealant 20 of the nozzle 51 is stopped and thus the arrangement of the sealant 20 on the inner surface 5 of the tire 1 is completed. Thereafter, the rotation of the tire 1 by the rotating device 40 is stopped and the nozzle 51 is moved outside the tire 1 by the moving device 53.

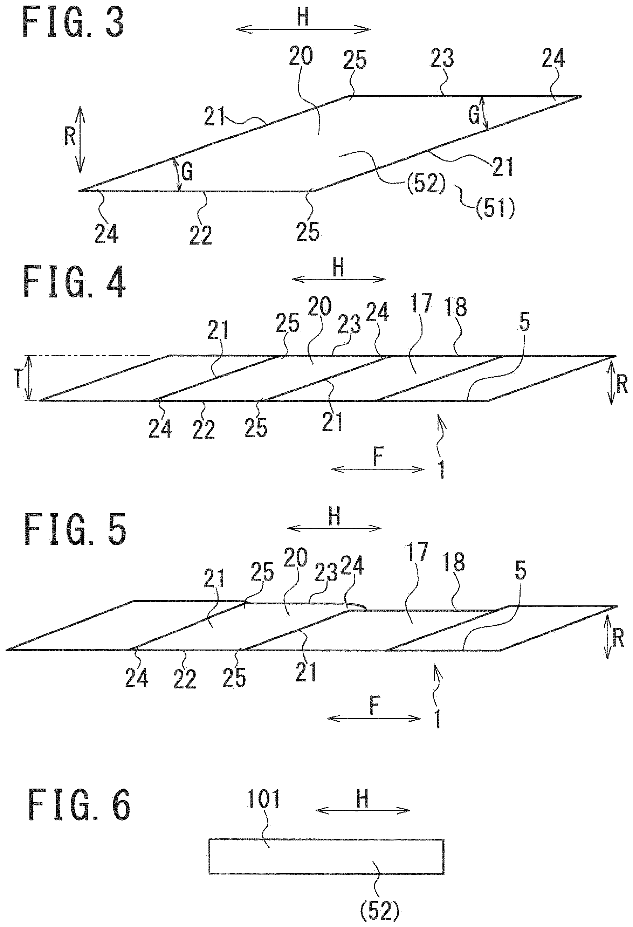

Fig. 3 is a sectional view of the sealant 20 of the present embodiment and shows a cross-sectional shape of the sealant 20 in the cross section in a width direction H and a thickness direction R of sealant 20 (cross section orthogonal to a length direction of the sealant 20). In addition, Fig. 3 is a front view showing the discharging port 52 of the nozzle 51 and shows an opening shape of the discharging port 52 viewed from the discharge direction of the sealant 20.

As illustrated, the discharging port 52 of the nozzle 51 is formed into the opening shape corresponding to the cross-sectional shape of the sealant 20. In addition, with respect to the opening dimensions of the discharging port 52, the dimension in the width direction H of the sealant 20 is wider than the dimension in the thickness direction R of the sealant 20. Here, the cross-sectional shape of the discharging port 52 is formed into a parallelogram.

With respect to the cross section in the width direction H and the thickness direction R of the sealant 20, the cross-sectional shape of the sealant 20 is formed by the discharging port 52 into the parallelogram. In addition, a pair of side surfaces 21 of the sealant 20 is inclined toward the same side in the width direction H of the sealant 20 with respect to the thickness direction R of the sealant 20. In other words, the pair of side surfaces 21 is an inclined surface inclined toward the one side in the width direction H with respect to the thickness direction R and, is located on both sides in the width direction H of the sealant 20 (tire width direction F) . In addition, the pair of side surfaces 21 is formed into smooth plane and is inclined at the same angle with respect to the thickness direction R.

The strip-like sealant 20 has a sticking surface 22 to be stuck to the inner surface 5 of the tire 1, an exposed surface 23 and four corners (two acute angle parts 24, two obtuse angle parts 25) in addition to the pair of side surfaces 21.
The exposed surface 23 of the sealant 20 is a surface on the opposite side of the sticking surface 22 and is to be exposed to an internal space of the tire 1. The sticking surface 22 and the exposed surface 23 are formed into smooth planes and are located on both sides in the thickness direction R of the sealant 20. The side surface 21 is located between an edge of the sticking surface 22 and an edge of the exposed surface 23. The acute angle part 24 and the obtuse angle part 25 are corners between the side surface 21 and the sticking surface 22 (or between the side surface 21 and the exposed surface 23) .

In the cross section of the sealant 20, the two acute angle parts 24 are formed into acute angle and are located at the both ends of one diagonal of the sealant 20. In addition, the two acute angle parts 24 are located on the opposite sides in the width direction H of the sealant 20 each other and project toward outside in the width direction H. The two obtuse angle parts 25 are formed into obtuse angle and are located at the both ends of the other diagonal of the sealant 20. The angles of the acute angle part 24 and the obtuse angle part 25 are the angle formed by the side surface 21 and the sticking surface 22 and the angle formed by the side surface 21 and the exposed surface 23 in the cross section of the sealant 20, respectively. The angle G of the acute angle part 24 is not less than 5°not more than 15°.Therefore, all of the angles of the acute angle corners throughout the corners of the sealant 20 are not less than 5°not more than 15°.

Fig. 4 is a sectional view illustrating the sealing layer 17 formed of the sealant 20 of the present embodiment and shows a cross-sectional shape in the width direction H of the sealant 20 arranged on the inner surface 5 of the tire 1.

As illustrated, at the time of forming the sealing layer 17, the positions of the adjacent side surfaces 21 of the sealant 20 are matched with each other so that the side surfaces 21 are overlapped and arranged. The strip-like sealant 20 is spirally arranged on the inner surface 5 of the tire 1 with both side surfaces 21 being overlapped with each other so that the sealing layer 17 is formed of the sealant 20. In the sealing layer 17, the adjacent side surfaces 21 of the sealant 20 in the width direction H (tire width direction F) are closely contacted with each other and stuck all over thereof.

The sticking surface 22 of the sealant 20 is closely contacted with and stuck to the inner surface 5 of the tire 1. In addition, in each of the sticking surface 22 side and the exposed surface 23 side, the positions of the acute angle part 24 and the obtuse angle part 25 of the adjacent sealant 20 are matched with each other so that the acute angle part 24 and the obtuse angle part 25 are overlapped and arranged. In the state, the sealant 20 is spirally arranged while the side surfaces 21 of the sealant 20 are being overlapped successively with each other. In this way, the exposed surfaces 23 of the plural rows of the sealant 20 are arranged to be flush with each other to make a surface 18 of the sealing layer 17. The surface 18 of the sealing layer 17 is exposed to the internal space of the tire 1.

Fig. 5 is a sectional view illustrating another example of the sealing layer 17 formed of the sealant 20 of the present embodiment.

As illustrated, even if the arrangement position of the parts of the sealant 20 is misaligned in the width direction H, an irregularity on the surface 18 of the sealing layer 17 is restrained from being generated by overlapping the inclined side surfaces 21 of the parts of the sealant 20 each other. In addition, for example, even if the irregularity is generated on the surface 18 of the sealing layer 17 due to a change of a rotational speed of the tire 1 or a change of the movement speed of the nozzle 51, the irregularity is restrained from getting large so that a difference in level on the surface 18 becomes small.

As explained above, according to the tire manufacturing method of the present embodiment, the thickness variations of the sealing layer 17 to be formed on the inner surface 5 of the tire 1 can be easily restrained. As a result, a uniformity of the thickness of the sealing layer 17 can be improved while a property of the sealing layer 17 is stabilized. In addition, an arrangement speed of the sealant 20 is increased, so that a forming efficiency of the sealing layer 17 can be improved, too.

It is preferable that a thickness T (cf. Fig. 4) of the strip-like sealant 20 is not less than 3 mm not more than 4.5 mm. If the thickness T of the sealant 20 is less than 3 mm, there exists a risk that the sealing performance of the sealing layer 17 would be affected. In addition, If the thickness T of the sealant 20 is bigger than 4.5 mm, it is concerned that the basic performance of the tire 1 related to its weight would be affected (such as an increase in rolling resistance) due to an increase in weight of the tire 1. A cost of the sealant 20 is increased due to increase in thickness T of the sealant 20, so that it is also concerned that a profitability of the tire 1 is disturbed.

In contrast, if the thickness T of the sealant 20 is not less than 3 mm not more than 4.5 mm, the sealing performance of the sealing layer 17 can be surely ensured. Even if a relatively large through-hole is opened in the tire 1, the through-hole can be sealed up by the sealant 20 without generating any break in the sealing layer 17. Even if the break is generated in the sealing layer 17, enough sealing performance can be provided by the sealing layer 17. But, the sealing performance of the sealing layer 17 can be further improved by preventing a break from being generated.

It is preferable that a breaking elongation of the sealant 20 is not less than 600 %. Here, the breaking elongation of the sealant 20 is the value (elongation at the time of braking) that is measured in accordance with Japanese Industrial Standards (JIS K6251) .
An original length of a test piece of the sealant 20 is assumed by L1, and a length of the test piece is assumed by L2 when the test piece is broken at a tensile test. In this case, the breaking elongation of the sealant 20 is the ratio of L2 to L1 ((L2/L1) ×100).

If the breaking elongation of the sealant 20 is less than 600 %, there exists a risk that the sealing performance of the sealing layer 17 would be affected. In contrast, if the breaking elongation of the sealant 20 is not less than 600 %, the sealing performance of the sealing layer 17 can be surely ensured. Even if a relatively large through-hole is opened in the tire 1, the through-hole can be sealed up by the sealant 20 without generating any break in the sealing layer 17. In addition, it is preferable that the breaking elongation of the sealant 20 is, for example, not more than 1500 %.

According to the present invention, the angle G (cf. Fig. 3) of the acute angle part 24 of the sealant 20 is not less than 5°not more than 15°. When the angle G of the acute angle part 24 is less than 5°, the acute angle part 24 is hard to be formed in the sealant 20. In addition, there exists a risk that a flow of the sealant 20 would be delayed in a part corresponding to the acute angle part 24 of the discharging port 52 of the nozzle 51, so that a break would be generated in the acute angle part 24. When the angle G of the acute angle part 24 is larger than 15°, there exists a risk that the width of the side surface 21 of the sealant 20 would be shortened, and a closely-contacted area between the side surfaces 21 would be decreased. In contrast, when the angle G of the acute angle part 24 of the sealant 20 is not less than 5°not more than 15°, the acute angle part 24 of the sealant 20 can be smoothly formed and the side surfaces 21 can be more surely closely contacted with each other.

To shorten a forming time of the sealing layer 17, two arranging devices 50 may be provided in the tire manufacturing device 30 (cf. Fig. 2) to arrange two strip-like sealants 20 at a same time on the inner surface 5 of the tire 1 by the two arranging devices 50. In this case, the inner surface 5 of the tire 1 is divided into two half parts in the tire width direction F and, two sealants 20 are arranged on the half part of the inner surface 5, respectively. In addition, arranging of the two sealants 20 is started from two positions on the inner surface 5, so that the two sealants 20 are spirally arranged on the inner surface 5, respectively. At that time, one sealant 20 is arranged from one end of the tread part 2 towards the tire equator in the tire width direction F and the other sealant 20 is arranged from the other end of the tread part 2 towards the tire equator in the tire width direction F. Or one sealant 20 is arranged from one end of the tread part 2 towards the tire equator in the tire width direction F and the other sealant 20 is arranged from the tire equator towards the other end of the tread part 2 in the tire width direction F.

In contrast, one strip-like sealant 20 may be arranged on the inner surface 5 of the tire 1 by one arranging device 50. In this case, the sealant 20 is arranged from one end of the tread part 2 towards the other end in the tire width direction F. In addition, the sealing layer 17 may be formed by using a preformed strip-like sealant 20. In this case, the exposed surface 23 of the sealant 20 is stuck to a strip-like film or the exposed surface 23 of the sealant 20 is coated with coating materials (powder etc.). Thereafter, the sealant 20 is spirally arranged on the inner surface 5 of the tire 1 while the sticking surface 22 of the sealant 20 is stuck to the inner surface 5 of the tire 1.

A frontend part and a rear end part of the sealant 20 can be arranged at any position in the tire circumferential direction on the inner surface 5 of the tire 1. In addition, to reduce a cavity resonance of the tire 1, a porous material (e.g., a sponge) may be arranged on the surface 18 of the sealing layer 17 by making use of adhesiveness of the sealant 20. The sealing layer 17 may be formed on the inner surface 5 of the tire 1 other than the tread part 2 in addition to the inner surface of the tread part 2. The tire 1 in which the sealing layer 17 is to be formed may be a tire for passenger cars, and be other tires (e.g., a tire for trucks, a tire for trucks and buses, and a tire for two-wheeled vehicles) . The tire 1 may be vulcanized after the sealing layer 17 has been formed on the inner surface 5 of an un-vulcanized tire 1.

As the sealant 20, a well-known sealant used for the sealing layer 17 can be used. For example, the sealant 20 is the rubber composition in which various compound ingredients (plasticizer, reinforcing filler etc.) are compounded for a rubber ingredient. Specifically, the sealant 20 includes at least one of isobutylene-isoprene rubber and ethylene propylene diene rubber (EPDM) as the rubber ingredient. For example, the isobutylene-isoprene rubber is halogenation isobutylene-isoprene rubber. In addition, a zinc oxide, a thiuram-based vulcanization accelerator and a plasticizer (here, liquid polybutene or process oil) are compounded for the rubber ingredient of the sealant 20.

2-10 pts.mass of the zinc oxide and 1-10 pts.mass of the thiuram-based vulcanization accelerator are compounded for 100 pts.mass of the rubber ingredient. In addition, the thiuram-based vulcanization accelerator and the zinc oxide are compounded for the rubber ingredient so as to satisfy the ratio (thiuram-based vulcanization accelerator: zinc oxide = 1: 1 ~ 1:3). It is preferable that the thiuram-based vulcanization accelerator is not more than 4 pts.mass, and it is preferable that the zinc oxide is not more than 5 pts.mass. It is preferable to use tetrabenzylthiuramdisulfide as the thiuram-based vulcanization accelerator. The thiuram-based vulcanization accelerator effectively acts with the aid of the zinc oxide, and fluidity or fastness of the sealant 20 is regulated based on the compounded amount of the thiuram-based vulcanization accelerator and the zinc oxide.

Not less than 150 pts.mass of the liquid polybutene or the process oil is compounded for 100 pts.mass of the rubber ingredient. In addition, thermoplastic resin (rosin-based resin, terpene-based resin, petroleum-based resin etc.) which is an adhesive is compounded for the sealant 20. In addition to the above-mentioned basic compound ingredient, various kinds of compound ingredients (reinforcing filler, stearic acid, antioxidant etc.) to be compounded for a normal rubber composition can be compounded for the sealant 20. The rubber composition (sealant 20) after compounding is kneaded by a kneading machine. The sealant 20 may be vulcanized during its kneading. In this case, it is preferable that the sealant 20 during its kneading is heated at 110-140°C, and it is more preferable that the sealant 20 is heated at 120-135°C. The plasticizer is prevented from being volatilized by performing the kneading of the sealant 20 at temperature not more than 140°C.

### (Forming test of the sealing layer)

To confirm an effect of the sealant 20, the sealing layer 17 was formed of the sealant 20 on the inner surface 5 of the tire 1 (called the embodiment) as described above. In addition, a sealing layer 100 was formed of a conventional sealant 101 on the inner surface 5 of the tire 1 (cf. Figs. 9A and 9B) (called the conventional example) . Furthermore, for comparison with the embodiment and the conventional example, the sealing layer was formed of a sealant having the cross-sectional shape which was different from those of the sealants 20, 101, on the inner surface 5 of the tire 1 (called the comparative example).

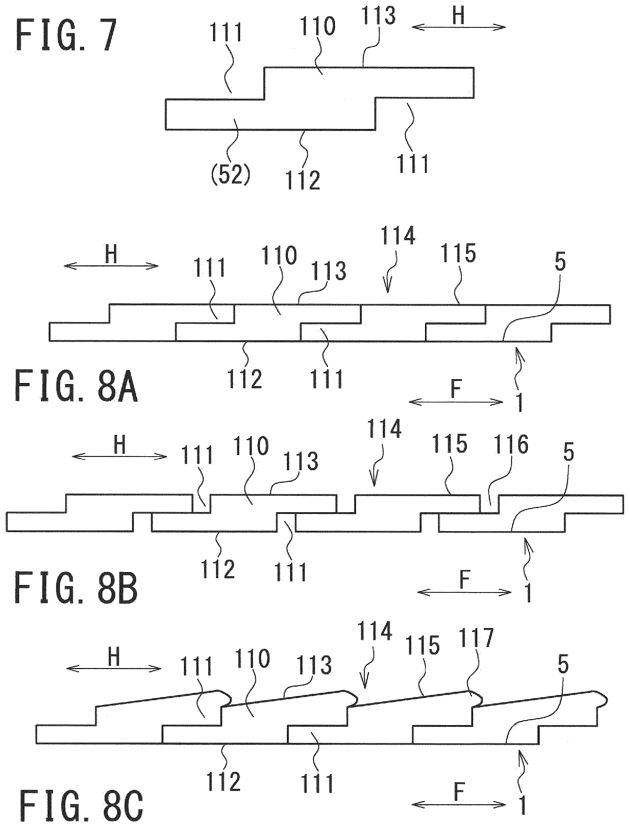

Fig. 6 is a sectional view of the sealant 101 of the conventional example, and Fig. 7 is a sectional view of a sealant 110 of the comparative example. In addition, Fig. 6 and Fig. 7 show the opening shape of the discharging port 52 of the nozzle 51 for forming the sealants 101,110 respectively.

As illustrated, each of the sealants 101 and 110 is discharged from the discharging port 52 and is formed into the cross-sectional shape corresponding to the opening shape of the discharging port 52. In the conventional example (cf. Fig. 6), a cross section of the sealant 101 is formed into a rectangular shape. The sealant 101 is spirally arranged on the inner surface 5 of the tire 1 to form the sealing layer 100 of the conventional example, with the sealant 101 being partly overlapped (cf. Fig. 9A and 9B).

In the comparative example (cf. Fig. 7), a cross section of the sealant 110 is formed into a bent shape having two stepped parts 111. The two stepped parts 111 are located on the opposite sides in the width direction H of the sealant 110 each other and are formed on a sticking surface 112 side and a exposed surface 113 side of the sealant 110, respectively. In addition, the two stepped parts 111 are formed in the same width and the same depth (step) . In the cross section of the sealant 110, the thickness of the sealant 110 of the part in which the stepped part 111 is formed is half of that of the sealant 110 of the part other than the stepped part 111.

Figs . 8A to 8C are sectional views illustrating a sealing layer 114 formed of the sealant 110 of the comparative example.

As illustrated, at the time of forming the sealing layer 114, the positions of the adjacent stepped parts 111 of the sealants 110 are matched with each other so that the sealant 110 (the stepped parts 111) are overlapped and arranged. In the state, the strip-like sealant 110 is spirally arranged on the inner surface 5 of the tire 1 to form the sealing layer 114 of the sealant 110. In the sealing layer 114, the adjacent stepped parts 111 of the sealant 110 in the width direction H are combined with each other so that the sealants 110 are arranged in parallel on the inner surface 5 of the tire 1.

At the time of forming of the sealing layer 114, the arrangement position of the sealant 110 is more easily adjusted by the arranging device 50 (cf. Fig. 2), as the rotational speed of the tire 1 decreases. By adjusting the arrangement positions of the sealant 110 (cf. Fig. 8A), the stepped parts 111 of the sealant 110 are accurately combined with each other, so that the sealant 110 are overlapped (called appropriate overlapping) . As a result, an irregularity of the surface 115 of the sealing layer 114 is decreased.

However, it is difficult to accurately match the positions of the stepped parts 111, and when the positions of the stepped parts 111 deviate in the width direction H, the irregularity of the surface 115 of the sealing layer 114 is increased (cf. Fig. 8B and Fig. 8C) . At that time, if the overlapped width of the sealants 110 becomes narrow (cf. Fig. 8B), the stepped parts 111 of the sealant 110 is recessed, so that a recess 116 is generated on the surface 115 of the sealing layer 114 (called narrow-width overlapping). In addition, when the overlapped width of the sealant 110 becomes wide (cf. Fig. 8C), the stepped part 111 of the sealant 110 is raised, so that a protrusion 117 is generated on the surface 115 of the sealing layer 114 (called wide-width overlapping). In particular, when the rotational speed of the tire 1 is increased to improve the forming efficiency of the sealing layer 114, it becomes difficult to adjust the arrangement position of the sealant 110. As a result, the irregularity is likely to be generated on the surface 115 of the sealing layer 114.

In the forming tests of the sealing layers 17, 100, 114, the tire 1 was turned at a predetermined rotational speed by the rotating device 40, so that the strip-like sealants 20, 101, 110 were arranged on the inner surface 5 of the tire 1, respectively. The rotational speed of the tire 1 is the arrangement speed of the sealants 20, 101, 110, and the arrangement positions of the sealants 20, 101, 110 are apt to deviate in the width direction H, as the rotational speed of the tire 1 is increased. When the rotational speed of the tire 1 in the embodiment is assumed 100, in the conventional example, the rotational speed of the tire 1 is 50, so that the tire 1 was rotated at a half rotational speed of that in the embodiment. In addition, in the comparative example, the rotational speeds of the tire 1 are 100 and 50, and the tire 1 was rotated at each of the rotational speeds.

Properties of the sealing layers 17, 100, 114 were investigated to determine thickness variations (unevenness) of the sealing layers 17, 100, 114. In order to measure the thicknesses of the sealing layers 17, 100, 114, before forming the sealing layers 17, 100, 114, a shape of the inner surface 5 of the tire 1 was detected by a detection sensor (e.g., laser sensor, 2D sensor). The shape of the inner surface 5 for one round of the tire 1 was detected and then the detected shape was recorded. Similarly, after forming the sealing layers 17, 100, 114, shapes of surfaces 18, 102, 115 of the sealing layers 17, 100, 114 for one round of the tire 1 were detected and the detected shapes were recorded. By calculating the differences between the shapes of the surfaces 18, 102, 115 of the sealing layers 17, 100, 114 and the shape of the inner surface 5 of the tire 1, the thicknesses of each part of the sealing layers 17, 100, 114 were measured, respectively.

Based on a size of the tire 1 and widths of the sealing layers 17, 100, 114 etc., the number of measurements of the thicknesses of the sealing layers 17, 100, 114 was decided. Here, the thicknesses of not less than 200,000 parts were measured and a range R of the thickness and a standard deviation σ of the thickness were calculated. The range R of the thickness is the difference between the maximum value of the thickness and the minimum value of the thickness (the maximum value - the minimum value). It is shown that the smaller the range R of the thickness and the standard deviation σ of the thickness are, the smaller the thickness variations of the sealing layers 17, 100, 114 are. Therefore, it is shown that the smaller the range R of the thickness and the standard deviation σ of the thickness are, the smaller the irregularities of the surfaces 18, 102, 115 of the sealing layers 17, 100, 114 are, thus the properties of the sealing layers 17, 100, 114 are preferable.

**Table 1**

| | | Conventional example | | Comparative example | | Embodiment |
|---|---|---|---|---|---|---|
| Rotational speed of tire | | 50 | 50 | 100 | 100 | 100 |
| Cross-sectional shape of sealant | | Fig. 6 | Fig. 7 | | | Fig. 3 |
| Overlapping of sealant | | - | Appropriate overlapping | Narrow-width overlapping | Wide-width overlapping | - |
| Property of sealing layer | R | 3.3 | 1.1 | 2.8 | 3.3 | 2.2 |
| | σ | 0.70 | 0.29 | 0.48 | 0.58 | 0.36 |

The results of the forming tests of the sealing layers 17, 100, 114 are shown in Table 1. In the conventional example, the range R of the thickness was 3.3, and the standard deviation σ of the thickness was 0.70. In contrast, in the appropriate overlapping of the comparative example, the range R (1.1) of the thickness and the standard deviation σ (0.29) of the thickness became smaller than those of the conventional example.

However, in the comparative example, when the rotational speed of the tire 1 was increased, it became hard to adjust the arranging position of the sealant 110, so that the narrow-width overlapping and the wide-width overlapping were generated in the sealant 110. In the narrow-width overlapping, the range R (2.8) of the thickness and the standard deviation σ (0.48) of the thickness became larger than those of the appropriate overlapping. In addition, even in the wide-width overlapping, the range R (3.3) of the thickness and the standard deviation σ (0.58) of the thickness became larger than those of the appropriate overlapping. As just described, in the comparative example, the thickness variations of the sealing layer 114 cannot be easily restrained.

In the embodiment, the range R (2.2) of the thickness and the standard deviation σ (0.36) of the thickness became smaller than those of the conventional example. From this, it was understood that in the embodiment, the thickness variations of the sealing layer 17 could be restrained so that the property of the sealing layer 17 was improved.

### Reference Signs List

- 1: tire
- 2: tread part
- 3: bead part
- 4: side wall part
- 5: inner surface
- 10: carcass
- 11: inner liner
- 12: belt
- 13: belt reinforcement layer
- 14: bead core
- 15: bead filler
- 16: tread rubber
- 17: sealing layer
- 18: surface
- 20: sealant
- 21: side surface
- 22: sticking surface
- 23: exposed surface
- 24: acute angle part
- 25: obtuse angle part
- 30: tire manufacturing device
- 31: control unit
- 40: rotating device
- 41: roller
- 42: drive unit
- 50: arranging device
- 51: nozzle
- 52: discharging port
- 53: moving device
- 54: arm
- 60: supply device
- 61: container
- 62: heating member
- 63: pressurizing device
- 64: supply pump
- 65: supply line

## Claims

1. A tire manufacturing method in which a sealing layer (17) is formed of a strip-like sealant (20) on an inner surface (5) of a tire (1);
wherein
a pair of side surfaces (21) of the sealant (20) located on both sides in a width direction (H) of the sealant (20) is inclined toward the same side in the width direction (H) of the sealant (20) with respect to a thickness direction (R) of the sealant (20), and
the sealant (20) is spirally arranged on the inner surface (S) of the tire (1) with the adjacent side surfaces (21) of the sealant (20) being overlapped with each other, wherein
the tire manufacturing method comprises the steps of:
placing the tire (1) in a rotating device (40),
placing a nozzle (51) in the tire (1) by a moving device (53),
rotating the tire (1) by the rotating device (40) so as to relatively move the nozzle (51) along the tire circumferential direction,
gradually moving the nozzle (51) in the tire width direction (F) by the moving device (53), the nozzle (51) facing to the inner surface (5) of the tire (1), and
at the same time, supplying sealant (20) to the nozzle (51) by a supply device (60) and discharging the sealant (20) from a discharging port (52) of the nozzle (51) towards the inner surface (5) of the tire (1),
the strip-like sealant (20) being formed into a predetermined cross-sectional shape by the discharging port (52) of the nozzle (51), and
wherein the pair of side surfaces (21) of the sealant (20) is inclined at an angle of not less than 5° and not more than 15° toward the same side in the width direction (H) of the sealant (20) with respect to the thickness direction (R) of the sealant (20).

2. The tire manufacturing method according to claim 1, wherein
a thickness (T) of the sealant (20) is not less than 3 mm not more than 4.5 mm.

3. The tire manufacturing method according to claim 1 or 2, wherein
a breaking elongation of the sealant (20) is not less than 600 %.

## Patentansprüche

1. Reifenfertigungsverfahren, bei dem eine Dichtungsschicht (17) aus einem streifenartigen Dichtungsmittel (20) auf einer Innenfläche (5) eines Reifens (1) gebildet wird;
wobei
ein Paar von Seitenflächen (21) des Dichtungsmittels (20), die sich auf beiden Seiten in einer Breitenrichtung (H) des Dichtungsmittels (20) befinden, hin zu der gleichen Seite in der Breitenrichtung (H) des Dichtungsmittels (20) in Bezug auf eine Dickenrichtung (R) des Dichtungsmittels (20) geneigt ist, und
das Dichtungsmittel (20) spiralförmig auf der Innenfläche (S) des Reifens (1) angeordnet ist, wobei die benachbarten Seitenflächen (21) des Dichtungsmittels (20) miteinander überlappt sind,
wobei
das Reifenfertigungsverfahren die folgenden Schritte umfasst:
Platzieren des Reifens (1) in einer Drehvorrichtung (40),
Platzieren einer Düse (51) in dem Reifen (1) durch eine Bewegungsvorrichtung (53),
Drehen des Reifens (1) durch die Drehvorrichtung (40), um so die Düse (51) relativ entlang der Reifenumfangsrichtung zu bewegen,
allmähliches Bewegen der Düse (51) in der Reifenbreitenrichtung (F) durch die Bewegungsvorrichtung (53), wobei die Düse (51) zu der Innenfläche (5) des Reifens (1) zeigt, und
zur gleichen Zeit, Zuführen von Dichtungsmittel (20) zu der Düse (51) durch eine Zuführungsvorrichtung (60) und Abgeben des Dichtungsmittels (20) aus einer Abgabeöffnung (52) der Düse (51) hin zu der Innenfläche (5) des Reifens (1),
wobei das streifenartige Dichtungsmittel (20) durch die Abgabeöffnung (52) der Düse (51) zu einer vorbestimmten Querschnittsgestalt geformt ist, und
wobei das Paar von Seitenflächen (21) des Dichtungsmittels (20) in einem Winkel von nicht weniger als 5° und nicht mehr als 15° hin zu der gleichen Seite in der Breitenrichtung (H) des Dichtungsmittels (20) in Bezug auf die Dickenrichtung (R) des Dichtungsmittels (20) geneigt ist.

2. Reifenfertigungsverfahren nach Anspruch 1, wobei
eine Dicke (T) des Dichtungsmittels (20) nicht weniger als 3 mm und nicht mehr als 4,5 mm beträgt.

3. Reifenfertigungsverfahren nach Anspruch 1 oder 2, wobei
eine Bruchdehnung des Dichtungsmittels (20) nicht weniger als 600 % beträgt.

## Revendications

1. Procédé de fabrication d'un pneumatique, dans lequel une couche d'étanchéité (17) est formée d'un matériau d'étanchéité semblable à une bande (20) sur une surface interne (5) d'un pneumatique (1) ;
dans lequel
une paire de surfaces latérales (21) du matériau d'étanchéité (20) située sur les deux côtés, dans une direction de la largeur (H) du matériau d'étanchéité (20) est inclinée vers le même côté, dans la direction de la largeur (H) du matériau d'étanchéité (20) par rapport à une direction de l'épaisseur (R) du matériau d'étanchéité (20), et
le matériau d'étanchéité (20) est agencé en spirale sur la surface interne (S) du pneumatique (1), les surfaces latérales adjacentes (21) du matériau d'étanchéité (20) se chevauchant l'une l'autre,
dans lequel
le procédé de fabrication du pneumatique comprend les étapes suivantes :
la mise en place du pneumatique (1) dans un dispositif de rotation (40),
la mise en place d'une buse (51) dans le pneumatique (1) par un dispositif de déplacement (53),
la rotation du pneumatique (1) par le dispositif de rotation (40), de sorte à déplacer la buse (51) de manière relative le long de la direction circonférentielle du pneumatique,
le déplacement progressif de la buse (51) dans la direction de la largeur du pneumatique (F) par le dispositif de déplacement (53), la buse (51) faisant face à la surface interne (5) du pneumatique (1), et
en même temps, la distribution de matériau d'étanchéité (20) vers la buse (51) par un dispositif d'alimentation (60) et la décharge du matériau d'étanchéité (20) à partir d'un orifice de décharge (52) de la buse (51) vers la surface interne (5) du pneumatique (1),
le matériau d'étanchéité semblable à une bande (20) étant formé en une forme de section transversale prédéterminée par l'orifice de décharge (52) de la buse (51), et
dans lequel la paire de surfaces latérales (21) du matériau d'étanchéité (20) est inclinée à un angle non inférieur à 5° et non supérieur à 15° vers le même côté, dans la direction de la largeur (H) du matériau d'étanchéité (20) par rapport à la direction de l'épaisseur (R) du matériau d'étanchéité (20).

2. Procédé de fabrication d'un pneumatique selon la revendication 1, dans lequel
une épaisseur (T) du matériau d'étanchéité (20) n'est pas inférieure à 3 mm et pas supérieure à 4,5 mm.

3. Procédé de fabrication d'un pneumatique selon la revendication 1 ou 2, dans lequel
un allongement à la rupture du matériau d'étanchéité (20) est inférieur à 600 %.
